# EUROPÄISCHE PATENTSCHRIFT

(11) **EP 0 829 489 B1**
(45) Veröffentlichungstag und Bekanntmachung des Hinweises auf die Patenterteilung: **04.12.2002**
(21) Anmeldenummer: 97115586.6
(22) Anmeldetag: 09.09.1997
(51) Int. Cl.: C08F 4/654, C08F 10/00

(54) **Bei ihrer Herstellung modifizierte Ziegler-Natta-Katalysatorsysteme**
Ziegler-Natta catalyst systems modified by their preparation
Systèmes catalytiques du type Ziegler-Natta modifiés par leur préparation

(30) Priorität: 13.09.1996 DE 19637367
(43) Veröffentlichungstag der Anmeldung: 18.03.1998
(73) Patentinhaber: Basell Poliolefine Italia S.p.A., 20124 Milano (IT); Novolen Technology Holdings C.V., 2596 JJ Den Haag (NL)
(72) Erfinder: Hüffer, Stephan, Dr., 67071 Ludwigshafen (DE); Moll, Ulrich, Dr., 67487 St Martin (DE); Kölle, Peter, Dr., 67098 Bad Dürkheim (DE); Hingmann, Roland, Dr., 68526 Ladenburg (DE)
(74) Vertreter: Colucci, Giuseppe

(56) Entgegenhaltungen:
- WO-A-93/23440

## Beschreibung

Die vorliegende Erfindung betrifft bei ihrer Herstellung modifizierte Ziegler-Natta-Katalysatorsysteme, enthaltend als aktive Bestandteile
a) eine titanhaltige Feststoffkomponente, die durch Umsetzung einer Verbindung des Titans mit einer Verbindung des Magnesiums, einem Halogen, einem anorganischen Oxid als Träger, einem C₁- bis C₈-Alkanol und einem Carbonsäureester als Elektronendonorverbindung erhalten wird,
   sowie als Cokatalysator,
b) eine Aluminiumverbindung und
c) gegebenenfalls eine weitere Elektronendonorverbindung, dadurch erhältlich,
daß man bei der Herstellung der titanhaltigen Feststoffkomponente a) zunächst in einer ersten Stufe ein anorganisches Oxid als Träger mit einer Lösung der Verbindung des Magnesiums in einem inerten Lösungsmittel versetzt, dabei dieses Gemisch 0,5 bis 5 Stunden lang bei einer Temperatur zwischen 10 und 120°C rührt, anschließend unter ständigem Rühren ein Halogen im wenigstens zweifachen Überschuß, bezogen auf die Verbindung des Magnesiums, hinzufügt, nach etwa 20 bis 120 Minuten dieses Reaktionsprodukt bei einer Temperatur von 10 bis 150°C mit einem C₁- bis C₈-Alkanol, einem Halogenid oder Alkoholat des drei- oder vierwertigen Titans sowie einem Carbonsäureester als Elektronendonorverbindung umsetzt, das daraus resultierende Gemisch wenigstens 30 Minuten lang bei einer Temperatur zwischen 10 und 150°C rührt, den so erhaltenen festen Stoff anschließend abfiltriert und wäscht und danach in einer zweiten Stufe den aus der ersten Stufe erhaltenen Feststoff in einem inerten Lösungsmittel, welches wenigstens 5 Gew.-% Titantetrachlorid enthält, extrahiert und wäscht, wobei als Lösungsmittel in beiden Stufen der Herstellung der titanhaltigen Feststoffkomponente a) ein aromatischer Kohlenwasserstoff verwendet wird.

Außerdem betrifft die Erfindung ein Verfahren zur Herstellung derartiger Ziegler-Natta-Katalysatorsysteme.

Katalysatorsysteme vom Typ der Ziegler-Natta-Katalysatoren sind u.a. aus der DE-A 42 16 548, der DE-A 44 19 438, der EP-A 530 599 und der US-A 4 857 613 bekannt. Diese Systeme werden insbesondere zur Polymerisation von C₂-C₁₀-Alk-1-enen verwendet und enthalten u.a. Verbindungen des mehrwertigen Titans, Aluminiumhalogenide und/oder -alkyle, sowie Elektronendonorverbindungen, insbesondere Siliciumverbindungen, Ether, Carbonsäureester, Ketone und Lactone, die einerseits in Verbindung mit der Titankomponente und andererseits als Cokatalysator verwendet werden.

Die Herstellung der Ziegler-Natta Katalysatoren geschieht üblicherweise in zwei Schritten. Zuerst wird die titanhaltige Feststoffkomponente hergestellt. Anschließend wird diese mit dem Cokatalysator umgesetzt. Mit Hilfe der so erhaltenen Katalysatoren wird anschließend die Polymerisation durchgeführt.

In der US-A 48 57 613 und der US-A 52 88 824 werden Katalysatorsysteme vom Typ der Ziegler-Natta-Katalysatoren beschrieben, die neben einer titanhaltigen Feststoffkomponente und einer Aluminiumverbindung noch organische Silanverbindungen als externe Elektronendonorverbindungen aufweisen. Die dabei erhaltenen Katalysatorsysteme zeichnen sich u.a. durch eine gute Produktivität aus und liefern Polymerisate des Propylens mit einer hohen Stereospezifität, d.h. einer hohen Isotaktizität, einem geringen Chloranteil und einer guten Morphologie, d.h. einem geringen Anteil an Feinstkorn.

Die Herstellung der titanhaltigen Feststoffkomponente erfolgt nach den Lehren der US-A 4 857 613 und der US-A 5 288 824 in zwei Schritten, wobei zunächst in einem inerten aliphatischen Kohlenwasserstoff, in der Regel Heptan, eine Katalysatorvorstufe erzeugt wird, die noch störende Begleitstoffe bzw. Nebenprodukte enthält. Diese Nebenprodukte werden im Anschluß an diesen ersten Schritt üblicherweise mit einem Gemisch aus einem aromatischen Kohlenwasserstoff und Titantetrachlorid aus der Katalysatorvorstufe herausgelöst. Diese Reinigung der Katalysatorvorstufe erfolgt häufig nur unvollständig, woraus sich erhebliche Einbußen hinsichtlich der Katalysatorproduktivität ergeben. Außerdem beobachtet man bei der großtechnischen Herstellung derartiger Katalysatorsysteme gelegentlich auftretende Qualitätsschwankungen, die auf eine unzureichende Abtrennung der Nebenprodukte von der titanhaltigen Feststoffkomponente zurückzuführen sind.

Der vorliegenden Erfindung lag daher die Aufgabe zugrunde, ausgehend von den in den US-A 4 857 613 und der US-A 5 288 824 beschriebenen Katalysatorsystemen nochmals verbesserte Katalysatorsysteme zu entwickeln, welche sich u.a. durch eine gesteigerte Produktivität und durch eine konstant gute Qualität auszeichnen.

Demgemäß wurden die eingangs definierten Katalysatorsysteme vom Typ der ziegler-Natta-Katalysatoren gefunden.

Die erfindungsgemäßen Katalysatorsysteme enthalten u.a. neben einer titanhaltigen Feststoffkomponente a) noch einen Cokatalysator. Als Cokatalysator kommt dabei die Aluminiumverbindung b) in Frage. Vorzugsweise wird neben dieser Aluminiumverbindung b) als weiterer Bestandteil des Cokatalysators noch eine Elektronendonorverbindung c) eingesetzt.

Zur Herstellung der titanhaltigen Feststoffkomponente a) werden als Titanverbindungen im allgemeinen Halogenide oder Alkoholate des drei- oder vierwertigen Titans verwendet, wobei die Chloride des Titans, insbesondere Titantetrachlorid, bevorzugt sind. Die titanhaltige Feststoffkomponente enthält ferner noch einen Träger.

Weiter werden bei der Herstellung der titanhaltigen Feststoffkomponente u.a. Verbindungen des Magnesiums eingesetzt. Als solche kommen insbesondere Magnesiumhalogenide, Magnesiumalkyle und Magnesiumaryle, sowie Magnesiumalkoxy- und Magnesiumaryloxyverbindungen in Betracht, wobei bevorzugt Magnesiumdichlorid, Magnesiumdibromid und Magnesiumdi-(C₁-C₁₀-alkyl)-Verbindungen verwendet werden. Daneben kann die titanhaltige Feststoffkomponente noch Halogen, bevorzugt Chlor oder Brom, enthalten.

Ferner enthält die titanhaltige Feststoffkomponente a) noch Elektronendonorverbindungen, beispielsweise mono- oder polyfunktionelle Carbonsäuren, Carbonsäureanhydride und Carbonsäureester, ferner Ketone, Ether, Alkohole, Lactone, sowie phosphor- und siliciumorganische Verbindungen. Bevorzugt werden als Elektronendonorverbindungen innerhalb der titanhaltigen Feststoffkomponente Phthalsäurederivate der allgemeinen Formel (II) 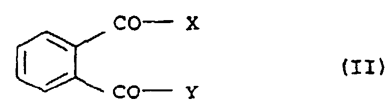 verwendet, wobei X und Y jeweils für ein Chloratom oder einen C₁- bis C₁₀-Alkoxyrest oder gemeinsam für Sauerstoff stehen. Besonders bevorzugte Elektronendonorverbindungen sind Phthalsäureester, wobei X und Y einen C₁-C₈-Alkoxyrest, beispielsweise einen Methoxy-, Ethoxy-, Propyloxy- oder einen Butyloxyrest bedeuten.

Weiter bevorzugte Elektronendonorverbindungen innerhalb der titanhaltigen Feststoffkomponente sind u.a. Diester von 3- oder 4-gliedrigen, gegebenenfalls substituierten Cycloalkyl-1,2-dicarbonsäuren, sowie Monoester von gegebenenfalls substituierten Benzophenon-2-carbonsäuren. Als Hydroxyverbindungen werden bei diesen Estern die bei Veresterungsreaktionen üblichen Alkohole verwendet, u.a. C₁-bis-C₁₅-Alkanole, C₅-bis-C₇-Cycloalkanole, die ihrerseits C₁-bis C₁₀-Alkylgruppen tragen können, ferner C₆-bis-C₁₀-Phenole.

Die titanhaltige Feststoffkomponente kann nach an sich bekannten Methoden hergestellt werden. Beispiele dafür sind u.a. in der EP-A 171 200, der GB-A 2 111 066, der US-A 48 57 613 und der US-A 52 88 824 beschrieben.

Bei der Herstellung der titanhaltigen Feststoffkomponente a) wird bevorzugt folgendes zweistufige Verfahren angewandt:

In der ersten Stufe versetzt man zunächst ein anorganisches Oxid, welches in der Regel einen pH-Wert von 1 bis 6,5, einen mittleren Teilchendurchmesser von 5 bis 200 µm, insbesondere von 20 bis 70 µm, ein Porenvolumen von 0,1 bis 10 cm³/g, insbesondere von 1,0 bis 4,0 cm³/g, und eine spezifische Oberfläche von 10 bis 1000 m²/g, insbesondere von 100 bis 500 m²/g, aufweist, mit einer Lösung der magnesiumhaltigen Verbindung in einem flüssigen Alkan, wonach man dieses Gemisch 0,5 bis 5 Stunden lang bei einer Temperatur zwischen 10 und 120°C rührt. Vorzugsweise setzt man pro Mol des Trägers 0,1 bis 1 mol der Magnesiumverbindung ein. Anschließend fügt man unter ständigem Rühren ein Halogen oder einen Halogenwasserstoff, insbesondere Chlor oder Chlorwasserstoff im wenigstens zweifachen, bevorzugt im wenigstens fünffachen molaren Überschuß, bezogen auf die magnesiumhaltige Verbindung, hinzu. Dabei erfolgt die Umsetzung der einzelnen Komponenten in Anwesenheit eines aromatischen Kohlenwasserstoffs, vorzugsweise eines C₇bis C₁₂-Alkylbenzols, insbesondere von Ethylbenzol. Nach etwa 30 bis 120 Minuten fügt man diesem Reaktionsprodukt bei einer Temperatur zwischen 10 und 150°C ein C₁- bis C₈-Alkanol, insbesondere Ethanol, ein Halogenid oder ein Alkoholat des drei- oder vierwertigen Titans, insbesondere Titantetrachlorid, sowie eine Elektronendonorverbindung hinzu. Dabei setzt man pro Mol Magnesium des aus der ersten Stufe erhaltenen Feststoffs 1 bis 10 mol des drei- oder vierwertigen Titans und 0,01 bis 1 mol, insbesondere 0,1 bis 0,5 mol, der Elektronendonorverbindung ein. Dieses Gemisch wird wenigstens 30 Minuten lang bei einer Temperatur zwischen 10 und 150°C gerührt, der so erhaltene feste Stoff anschließend abfiltriert und mit einem C₇- bis C₁₀-Alkylbenzol, bevorzugt mit Ethylbenzol, gewaschen.

In der zweiten Stufe extrahiert man den aus der ersten Stufe erhaltenen Feststoff einige Stunden lang bei Temperaturen zwischen 100 und 150°C mit überschüssigem Titantetrachlorid oder einer im Überschuß vorliegenden Lösung von Titantetrachlorid in einem inerten Lösungsmittel, vorzugsweise einem C₇-C₁₀-Alkylbenzol, wobei das Lösungsmittel wenigstens 5 Gew.-% Titantetrachlorid enthält. Danach wäscht man das. Produkt solange mit einem flüssigen Alkan, bis der Gehalt der Waschflüssigkeit an Titantetrachlorid weniger als 2 Gew.-% beträgt.

Erfindungsgemäß erfolgt die Umsetzung der einzelnen Komponenten zur Herstellung der titanhaltigen Feststoffkomponente a) in Anwesenheit eines aromatischen Kohlenwasserstoffs, insbesondere eines C₇- bis C₁₂-Alkylbenzols oder eines halogenierten Benzolderivats, wobei Ethylbenzol vorzugsweise eingesetzt wird. Es ist auch möglich, als Lösungsmittel ein Gemisch aus mindestens 10 Gew.-%, insbesondere aus mindestens 20 Gew.-% eines aromatischen Kohlenwasserstoffs und aus bis zu 90 Gew.-%, insbesondere aus bis zu 80 Gew.-% eines aliphatischen Kohlenwasserstoffs zu verwenden. Als aliphatische Kohlenwasserstoffe seien in diesem Zusammenhang insbesondere C₅- bis C₁₂-Alkane zu nennen, vorzugsweise Hexan, Heptan sowie Isododecan.

Aufgrund der verbesserten Löslichkeit der bei der Umsetzung der einzelnen Komponenten auftretenden störenden Nebenprodukte werden diese bereits vor dem eigentlichen Extraktionsschritt ausgeschleust, so daß in der nachfolgenden zweiten Stufe der Extraktionsschritt sehr wirksam ausfällt.

In der titanhaltigen Feststoffkomponente a) wird vorzugsweise ein solches feinteiliges anorganisches Oxid als Träger verwendet, welches einen pH-Wert von 1 bis 6,5, einen mittleren Teilchendurchmesser von 5 bis 200 µm, insbesondere von 20 bis 70 µm und einen mittleren Teilchendurchmesser der Primärpartikel von 1 bis 20 µm, insbesondere von 1 bis 5 µm aufweist. Bei den sogenannten Primärpartikeln handelt es sich dabei um poröse, granuläre Oxidpartikel, welche durch Mahlung, gegebenenfalls nach entsprechender siebung, aus einem entsprechenden Hydrogel erhalten werden. Das Hydrogel wird dabei im sauren Bereich, d.h. in einem Bereich mit einem pH-Wert zwischen 1 und 6,5 erzeugt, oder aber mit entsprechend sauren Waschlösungen nachbehandelt und gereinigt.

Weiterhin ist das bevorzugt zu verwendende feinteilige anorganische Oxid u.a. auch noch dadurch charakterisiert, daß es Hohlräume bzw. Kanäle mit einem mittleren Durchmesser von 1 bis 20 µm, insbesondere von 1 bis 15 µm aufweist, deren makroskopischer Volumenanteil am Gesamtpartikel im Bereich von 5 bis 30 %, insbesondere im Bereich von 10 bis 30 % liegt. Das feinteilige anorganische Oxid weist ferner insbesondere ein Porenvolumen von 0,1 bis 10 cm³/g, bevorzugt von 1,0 bis 4,0 cm³/g und eine spezifische Oberfläche von 10 bis 1000 m²/g, bevorzugt von 100 bis 500 m²/g auf. Der pH-Wert, d.h. der negative dekadische Logarithmus der Protonenkonzentration des anorganischen Oxids liegt im Bereich von 1 bis 6,5, insbesondere im Bereich von 2 bis 5.

Bevorzugte anorganische Oxide sind insbesondere Oxide des Siliciums, des Aluminiums, des Titans oder eines der Metalle der I. bzw. der II. Hauptgruppe des Periodensystems. Als ganz bevorzugtes Oxid wird neben Aluminiumoxid oder Magnesiumoxid oder einem Schichtsilikat auch Kieselgel (SiO₂) verwendet, wobei dieses insbesondere durch Sprühtrocknung erhalten werden kann. Es können auch sogenannte Cogele, d.h. Gemische von zwei verschiedenen anorganischen Oxiden, eingesetzt werden.

Das anorganische Oxid liegt dabei innerhalb der titanhaltigen Feststoffkomponente a) vorzugsweise in solchen Mengen vor, daß auf 1 Mol des anorganischen Oxids 0,1 bis 1,0 Mol, insbesondere 0,2 bis 0,5 Mol der Verbindung des Magnesiums treffen.

Die auf diese Weise erhältliche titanhaltige Feststoffkomponente wird mit einem Cokatalysator als Ziegler-Natta-Katalysatorsystem verwendet. Als Cokatalysator kommt dabei u.a. eine Aluminiumverbindung b) in Frage.

Als Cokatalysatoren geeignete Aluminiumverbindungen b) sind neben Trialkylaluminium auch solche Verbindungen, bei denen eine Alkylgruppe durch eine Alkoxygruppe oder durch ein Halogenatom, beispielsweise durch Chlor oder Brom, ersetzt ist. Bevorzugt werden Tialkylaluminiumverbindungen verwendet, deren Alkylgruppen jeweils 1 bis 8 C-Atome aufweisen, beispielsweise Trimethyl-, Triethyl- oder Methyldiethylaluminium.

Bevorzugt verwendet man neben der Aluminiumverbindung b) noch als weiteren Cokatalysator Elektronendonorverbindungen c) wie beispielsweise mono- oder polyfunktionelle Carbonsäuren, Carbonsäureanhydride und Carbonsäureester, ferner Ketone, Ether, Alkohole, Lactone, sowie phosphor- und siliciumorganische Verbindungen. Bevorzugte Elektronendonorverbindungen sind dabei siliciumorganische verbindungen der allgemeinen Formel (I)

R¹ ₙSi(OR²)₄₋ₙ (I)

wobei
R¹ gleich oder verschieden ist und eine C₁- bis C₂₀-Alkylgruppe, eine 5- bis 7-gliedrige Cycloalkylgruppe, die ihrerseits eine C₁- bis C₁₀-Alkylgruppe tragen kann, oder eine C6- bis
C₂₀-Aryl- oder Arylalkylgruppe bedeutet, R² gleich oder verschieden ist und eine C₁- bis C₂₀-Alkylgruppe bedeutet und n für die Zahlen 1, 2 oder 3 steht. Besonders bevorzugt werden dabei solche Verbindungen, in denen R¹ eine C₁- bis C₈-Alkylgruppe oder eine 5- bis 7-gliedrige Cycloalkylgruppe, sowie R² eine C₁- bis C₄-Alkylgruppe bedeutet und n für die Zahlen 1 oder 2 steht.

Unter diesen Verbindungen sind insbesondere Dimethoxydiisopropylsilan, Dimethoxyisobutylisopropylsilan, Dimethoxydiisobutylsilan, Dimethoxydicyclopentylsilan, Dimethoxyisobutylsec.butylsilan, Dimethoxyisopropylsec.butylsilan, Diethoxydicyclopentylsilan und Diethoxyisobutylisopropylsilan hervorzuheben.

Die einzelnen Verbindungen b) sowie gegebenenfalls c) können in beliebiger Reihenfolge einzeln oder als Gemisch zweier Komponenten als Cokatalysator verwendet werden.

Die als Cokatalysatoren wirkenden Verbindungen b) und gegebenenfalls c) kann man sowohl nacheinander als auch zusammen auf die titanhaltige Feststoffkomponente a) einwirken lassen. Üblicherweise geschieht dies bei Temperaturen von 0 bis 150°C, insbesondere von 20 bis 90°C und Drücken von 1 bis 100 bar; insbesondere von 1 bis 40 bar.

Bevorzugt werden die Cokatalysatoren b) sowie gegebenenfalls c) in einer solchen Menge eingesetzt, daß das Atomverhältnis zwischen Aluminium aus der Aluminiumverbindung und Titan aus der titanhaltigen Feststoffkomponente a) 10:1 bis 800:1, insbesondere 20:1 bis 200:1, und das Molverhältnis zwischen der Aluminiumverbindung und der als Cokatalysator eingesetzten Elektronendonorverbindung c) 1:1 bis 250:1, insbesondere 10:1 bis 80:1 beträgt.

Die erfindungsgemäßen Katalysatorsysteme werden zur Herstellung von Polymerisaten von C₂-C₁₀-Alk-1-enen verwendet. Sie eigenen sich besonders gut für die Herstellung von Polymerisaten des Propylens und des Ethylens, d.h. von entsprechenden Homopolymerisaten und Copolymerisaten dieser Monomere zusammen mit anderen C₂-C₁₀-Alk-1-enen. Dabei beträgt der Anteil der Monomere Propylen bzw. Ethylen an den Copolymerisaten mindestens 50 mol-%.

Unter der Bezeichnung C₂-C₁₀-Alk-1-ene sollen dabei u.a. Ethylen, Propylen, But-1-en, Pent-1-en, Hex-1-en, Hept-1-en oder Oct-1-en verstanden werden, wobei die Comonomere Ethylen, Propylen und But-1-en besonders bevorzugt sind.

Die erfindungsgemäßen Katalysatorsysteme können aber auch zur Herstellung von Polymerisaten anderer C₂-C₁₀-Alk-1-ene verwendet werden, beispielsweise zur Herstellung von Homo- oder Copolymerisaten des But-1-ens, des Pent-1-ens, des Hex-1-ens, des Hept-1-ens oder des Oct-1-ens.

Vorzugsweise werden mit dem erfindungsgemäßen Katalysatorsystem solche Polymerisate hergestellt, die
50 bis 100 mol-% Propylen,
0 bis 50 mol-%, insbesondere 0 bis 30 mol-% Ethylen und
0 bis 20 mol-%, insbesondere 0 bis 10 mol-% C₄- bis
C₁₀-Alk-1-ene enthalten. Die Summe der mol-% ergibt stets 100.

Die Herstellung derartiger Polymerisate von C₂-C₁₀-Alk-1-enen kann in den üblichen, für die Polymerisation von C₂-C₁₀-Alk-1-enen verwendeten Reaktoren entweder absatzweise oder bevorzugt kontinuierlich u.a. als Suspensionspolymerisation oder bevorzugt als Gasphasenpolymerisation durchgeführt werden. Geeignete Reaktoren sind u.a. kontinuierlich betriebene Rührreaktoren, die ein Festbett aus feinteiligem Polymerisat enthalten, welches üblicherweise durch geeignete Rührvorrichtungen in Bewegung gehalten wird. Selbstverständlich kann die Reaktion auch in einer Reihe von mehreren, hintereinander geschalteten Reaktoren durchgeführt werden (Reaktorkaskade). Die Reaktionsdauer hängt entscheidend von den jeweils gewählten Reaktionsbedingungen ab. Sie liegt üblicherweise zwischen 0,2 und 20 Stunden, meistens zwischen 0,5 und 10 Stunden.

Die Polymerisationsreaktion wird zweckmäßigerweise bei Temperaturen von 20 bis 150°C und Drücken von 1 bis 100 bar durchgeführt. Bevorzugt sind dabei Temperaturen von 40 bis 100°C und Drücke von 10 bis 50 bar. Die Molmasse der dabei gebildeten Polyalk-1-ene kann durch Zugabe von in der Polymerisationstechnik gebräuchlichen Reglern, beispielsweise von Wasserstoff, kontrolliert und über einen weiten Bereich eingestellt werden. Weiterhin ist es möglich, inerte Lösungsmittel wie beispielsweise Toluol oder Hexan, Inertgas wie Stickstoff oder Argon und kleinere Mengen Polypropylenpulver mitzuverwenden.

Die mit Hilfe des erfindungsgemäßen Katalysatorsystems erhaltenen Propylenhomo- und -copolymerisate sind in den für Polyalk-1-ene üblichen Molmassen erhältlich, wobei Polymerisate mit Molmassen (Gewichtsmittel) zwischen 20 000 und 500 000 bevorzugt werden. Ihre Schmelzflußindizes, bei 230°C und unter einem Gewicht von 2,16 kg, nach DIN 53 735 liegen im Bereich von 0,1 bis 100 g/10 min, insbesondere im Bereich von 0,5 bis 50 g/10 min.

Das erfindungsgemäße Katalysatorsystem weist gegenüber den bisher bekannten Katalysatorsystemen eine erhöhte Produktivität und eine ausgezeichnete Stereospezifität, insbesondere bei Gasphasenpolymerisationen auf. Die auf diese Weise erhältlichen Polymerisate zeichnen sich auch durch eine hohe Schüttdichte, geringe heptan- und xylollösliche Anteile und einem niedrigen Restchlorgehalt aus.

Aufgrund ihrer guten mechanischen Eigenschaften eignen sich die mit dem erfindungsgemäßen Katalysatorsystem hergestellten Propylenpolymerisate vor allem für die Herstellung von Folien, Fasern und Formkörpern.

### Beispiele

### Beispiel 1

a) Herstellung der titanhaltigen Feststoffkomponente (1)
   In einer ersten Stufe wurde feinteiliges Kieselgel (SiO₂), das einen Teilchendurchmesser von 20 bis 45 µm, ein Porenvolumen von 1,5 cm³/g und eine spezifische Oberfläche von 260 m²/g aufwies, mit einer Lösung von n-Butyloctylmagnesium in n-Heptan versetzt, wobei pro Mol SiO₂ 0,3 Mol der Magnesiumverbindung eingesetzt wurden. Das feinteilige Kieselgel war zusätzlich durch einen pH-Wert von 6,5, eine mittlere Teilchengröße der Primärpartikel von 3-5 µm und durch Hohlräume und Kanäle mit einem Durchmesser von 3-5 µm charakterisiert, wobei der makroskopische Volumenanteil der Hohlräume und Kanäle aus Gesamtpartikel bei etwa 15 % lag. Die Lösung wurde 30 Minuten bei 95°C gerührt, danach auf 20°C abgekühlt, wonach die 10-fache molare Menge, bezogen auf die magnesiumorganische Verbindung, an Chlorwasserstoff eingeleitet wurde. Die Umsetzung der einzelnen Komponenten erfolgte dabei in 170 ml Ethylbenzol als Lösungsmittel. Nach 60 Minuten wurde das Reaktionsprodukt unter ständigem Rühren mit 3 Mol Ethanol pro Mol Magnesium versetzt. Dieses Gemisch wurde 0,5 Stunden bei 80°C gerührt und danach mit 7,2 Mol Titantetrachlorid und 0,5 Mol Di-n-butylphthalat, jeweils bezogen auf 1 Mol Magnesium, versetzt. Anschließend wurde 1 Stunde bei 100°C gerührt, der so erhaltene feste Stoff abfiltriert und einmal mit Ethylbenzol gewaschen.
   Das daraus erhaltene Festprodukt extrahierte man 2 Stunden lang bei 125°C mit einer 10 vol.-%igen Lösung von Titantetrachlorid in Ethylbenzol. Danach wurde das Festprodukt durch Filtration vom Extraktionsmittel getrennt und solange mit n-Heptan gewaschen, bis das Extraktionsmittel nur noch 0,3 Gew.-% Titantetrachlorid aufwies.
   Die titanhaltige Feststoffkomponente enthielt
   3,6 Gew.-% Ti
   7,1 Gew.-% Mg
   27,9 Gew.-% Cl.

   Die Bestimmung des Teilchendurchmessers erfolgte durch Coulter-Counter-Analyse (Korngrößenverteilung der Kieselgelpartikel), die des Porenvolumens und der spezifischen Oberfläche durch Stickstoff-Absorption nach DIN 66131 oder durch Quecksilber-Porosimetrie nach DIN 66133. Die Bestimmung der mittleren Teilchengröße der Primärpartikel, des Durchmessers der Hohlräume und Kanäle sowie deren makroskopischer Volumenanteil geschah mit der Hilfe der Scanning Electron Mikroscopy (Rasterelektronenmikroskopie) bzw. der Electron Probe Micro Analysis (Elektronenstrahl-Mikrobereichsanalyse) jeweils an Kornoberflächen und an Kornquerschnitten des Kieselgels. Der pH-Wert des Kieselgels wurde mit Hilfe der in S. R. Morrison, "The Chemical Physics of Surfaces", Plenum Press, New York [1977] auf den Seiten 130 und 131 beschriebenen Methode ermittelt.
b) Polymerisation von Propylen
   Die Polymerisation wurde in einem mit einem Rührer versehenen Autoklavenreaktor mit einem Nutzvolumen von 10 l in Anwesenheit von Wasserstoff als Molekulargewichtsregler in der Gasphase durchgeführt.
   In den Gasphasenreaktor wurde bei einem Druck von 28 bar und bei einer Temperatur von 70°C gasförmiges Propylen in Gegenwart von 8 Liter Wasserstoff eingeleitet. Bei einer Verweilzeit von 1 Stunde wurde mit Hilfe der in Beispiel 1 a beschriebenen titanhaltigen Feststoffkomponente a) polymerisiert, wobei 100 mg der titanhaltigen Feststoffkomponente a) 10 mMol Triethylaluminium und 1 mmol Dimethoxyisobutylisopropylsilan als Cokatalysator verwendet wurden.

Nach Beendigung der Gasphasenpolymerisation erhielt man ein Propylenhomopolymerisat mit einem Schmelzflußindex von 11,4 g/10 min., bei 230°C und 2,16 kg (nach DIN 53 735).

In der nachfolgenden Tabelle 2 sind für das erhaltene Propylenhomopolymerisat die Produktivität des eingesetzten Katalysatorsystems (erhaltene Menge an Polymerisat in Gramm/eingesetzte Menge der titanhaltigen Feststoffkomponente in Gramm), die xylolund heptanlöslichen Anteile, der Chlorgehalt, der Schmelzflußindex und die Schüttdichte aufgeführt.

### Vergleichsbeispiel A

Es wurde unter ansonsten gleichen Bedingungen zuerst eine titanhaltige Feststoffkomponente hergestellt und danach Propylen polymerisiert, wobei bei der Herstellung der titanhaltigen Feststoffkomponente a) als Lösungsmittel anstelle von Ethylbenzol die gleiche Menge von n-Heptan verwendet wurde.

In der nachfolgenden Tabelle 1 sind für das erfindungsgemäße Beispiel 1 und für das Vergleichsbeispiel A das bei der Herstellung der titanhaltigen Feststoffkomponente a) verwendete Lösungsmittel, die verwendete Magnesiumverbindung, der eingesetzte Träger (mit dem Volumenanteil der Poren), die Extraktionsdauer im zweiten Schritt der Herstellung der titanhaltigen Feststoffkomponente a) und deren Gehalte an Magnesium, Titan und Chlor aufgeführt.

Die weitere Tabelle 2 enthält die Daten bzgl. der Produktivität des eingesetzten Katalysatorsystems, der xylol- und heptanlöslichen Anteile im erhaltenen Propylenhomopolymerisat sowie dessen Chlorgehalt, Schmelzflußindex und Schüttdichte.

### Beispiele 2 bis 4 und Vergleichsbeispiele B und C

In allen weiteren Beispielen 2 bis 4 und Vergleichsbeispielen B und C wurde unter ansonsten gleichen Bedingungen zuerst eine titanhaltige Feststoffkomponente hergestellt und danach Propylen polymerisiert, wobei, wie der Tabelle 1 zu entnehmen ist, entweder das Lösungsmittel bei der Herstellung der titanhaltigen Feststoffkomponente a), die Extraktionsdauer, die verwendete Magnesiumverbindung oder der eingesetzte Träger variiert wurden. Ferner enthält die Tabelle 1 die Anteile an Magnesium, Titan und Chlor in der titanhaltigen Feststoffkomponente a).

In der weiter aufgeführten Tabelle 2 sind für alle Beispiele und Vergleichsbeispiele die Eigenschaften der erhaltenen Polymerisate hinsichtlich des xylol- und heptanlöslichen Anteils, des Chlorgehalts, des Schmelzflußindexes und der Schüttdichte aufgeführt. Darüber hinaus enthält Tabelle 2 auch Angaben über die Produktivität des verwendeten Katalysatorsystems.

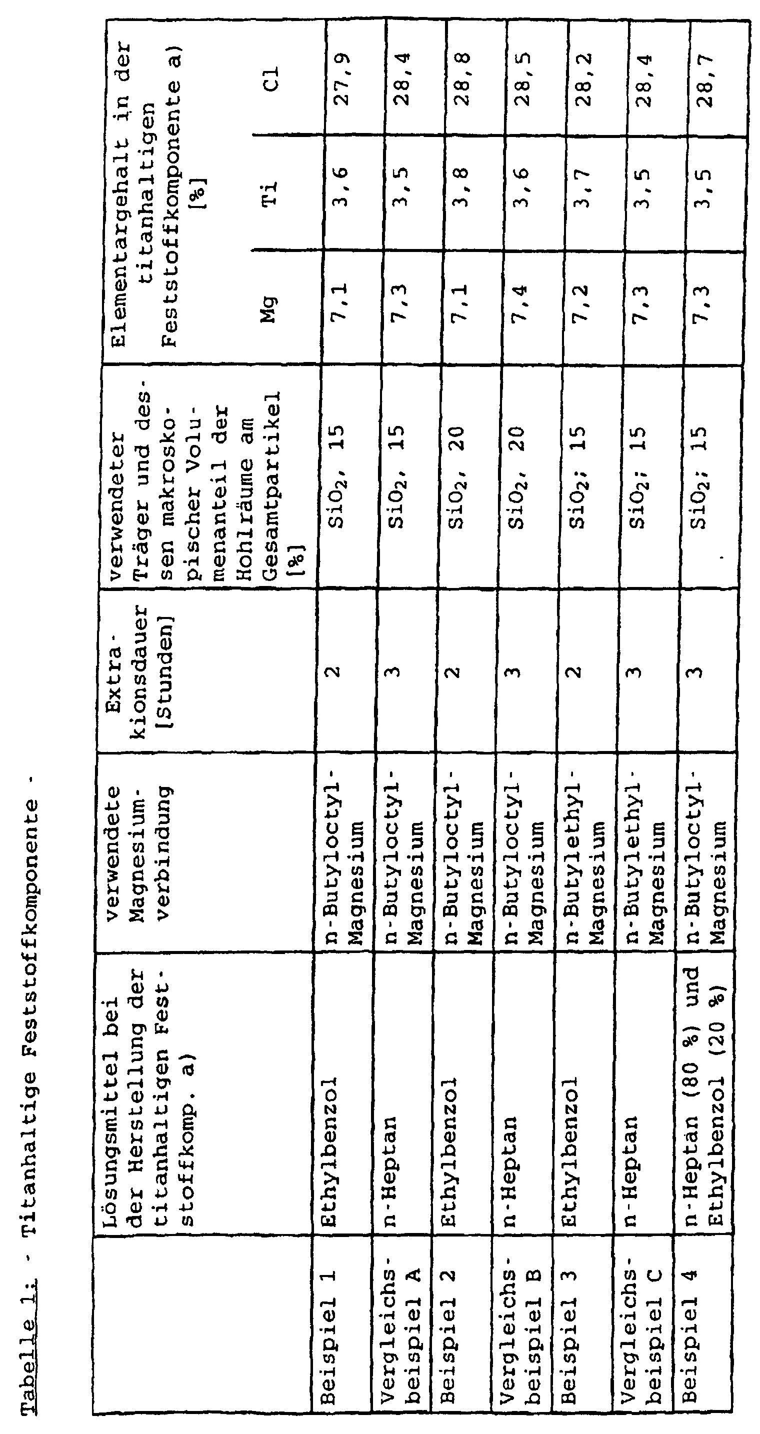

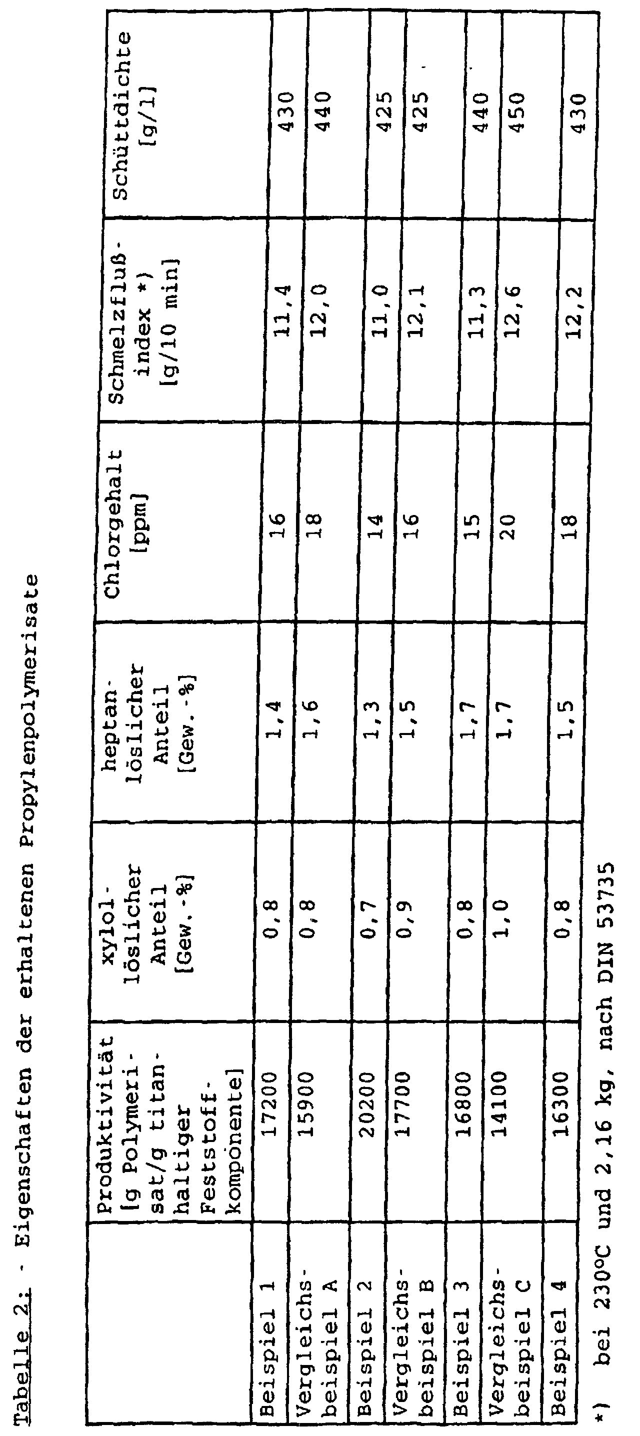

Aus den aufgeführten Tabellen 1 und 2 wird ersichtlich, daß bei Mitverwendung eines aromatischen Kohlenwasserstoffs als Lösungsmittel bei der Herstellung der titanhaltigen Feststoffkomponente Katalysatorsysteme entstehen, die zu Polymerisaten mit reduzierten xylol- und heptanlöslichen Anteilen sowie einem verringerten Chlorgehalt führen. Die erfindungsgemäßen Katalysatorsysteme zeichnen sich u.a. auch durch eine erhöhte Produktivität aus. Bei ihrer Herstellung kann die Extraktionszeit verkürzt werden.

## Patentansprüche

1. Katalysatorsysteme von Typ der Ziegler-Natta-Katalysatoren, enthaltend als aktive Bestandteile
a) eine titanhaltige Feststoffkomponente, die durch Umsetzung einer Verbindung des Titans mit einer Verbindung des Magnesiums, einem Halogen, einem anorganischen Oxid als Träger, einem C₁- bis C₈-Alkanol und einem Carbonsäureester als Elektronendonorverbindung erhalten wird,
sowie als Cokatalysator,
b) eine Aluminiumverbindung und
c) gegebenenfalls eine weitere Elektronendonorverbindung, dadurch erhältlich,
daß man bei der Herstellung der titanhaltigen Feststoffkomponente a) zunächst in einer ersten Stufe ein anorganisches Oxid als Träger mit einer Lösung der Verbindung des Magnesiums in einem inerten Lösungsmittel versetzt, dabei dieses Gemisch 0,5 bis 5 Stunden lang bei einer Temperatur zwischen 10 und 120°C rührt, anschließend unter ständigem Rühren ein Halogen im wenigstens zweifachen Überschuß, bezogen auf die Verbindung des Magnesiums, hinzufügt, nach etwa 20 bis 120 Minuten dieses Reaktionsprodukt bei einer Temperatur von 10 bis 150°C mit einem C₁- bis C₈-Alkanol, einem Halogenid oder Alkoholat des drei- oder vierwertigen Titans sowie einem Carbonsäureester als Elektronendonorverbindung umsetzt, das daraus resultierende Gemisch wenigstens 30 Minuten lang bei einer Temperatur zwischen 10 und 150°C rührt, den so erhaltenen festen Stoff anschließend abfiltriert und wäscht und danach in einer zweiten Stufe den aus der ersten Stufe erhaltenen Feststoff in einem inerten Lösungsmittel, welches wenigstens 5 Gew.-% Titantetrachlorid enthält, extrahiert und wäscht, wobei als Lösungsmittel in beiden Stufen der Herstellung der titanhaltigen Feststoffkomponente a) ein aromatischer Kohlenwasserstoff verwendet wird.

2. Katalysatorsysteme nach Anspruch 1, wobei als aromatischer Kohlenwasserstoff bei der Umsetzung der einzelnen Komponenten zur Herstellung der titanhaltigen Feststoffkomponente a) ein C₇- bis C₁₂-Alkylbenzol verwendet wird.

3. Katalysatorsysteme nach den Ansprüchen 1 oder 2, wobei als aromatischer Kohlenwasserstoff bei der Umsetzung der einzelnen Komponenten zur Herstellung der titanhaltigen Feststoffkomponente a) Ethylbenzol verwendet wird.

4. Katalysatorsysteme nach einem der Ansprüche 1 bis 3, wobei das verwendete anorganische Oxid einen pH-Wert von 1 bis 6,5 einen mittleren Teilchendurchmesser von 5 bis 200 µm und Hohlräume bzw. Kanäle mit einem mittleren Durchmesser von 1 bis 20 µm aufweist, deren makroskopischer Volumenanteil am Gesamtpartikel im Bereich von 5 bis 30 % liegt.

5. Katalysatorsysteme nach einem der Ansprüche 1 bis 4, wobei das verwendete anorganische Oxid sprühgetrocknet ist.

6. Katalysatorsysteme nach einem der Ansprüche 1 bis 5, wobei als anorganisches Oxid Kieselgel (SiO₂) verwendet wird.

7. Katalysatorsysteme nach den Ansprüchen 1 bis 6, wobei als weitere Elektronendonorverbindung c) siliciumorganische Verbindungen der allgemeinen Formel (I)
R¹ ₙSi(OR²)₄₋ₙ (I)
verwendet werden, wobei R¹ gleich oder verschieden ist und eine C₁- bis C₂₀-Alkylgruppe, eine 5- bis 7-gliedrige Cycloalkylgruppe, die ihrerseits eine C₁- bis C₁₀-Alkylgruppe tragen kann, oder eine C₆- bis C₂₀-Aryl- oder Arylalkylgruppe, R² gleich oder verschieden ist und eine C₁- bis C₂₀-Alkylgruppe bedeutet und n für die Zahlen 1, 2 oder 3 steht.

8. Katalysatorsysteme nach den Ansprüchen 1 bis 7, wobei als Aluminiumverbindung b) eine Trialkylaluminiumverbindung verwendet wird, deren Alkylgruppen jeweils 1 bis 8 C-Atome aufweisen.

9. Verfahren zur Herstellung von Katalysatorsystemen gemäß den Ansprüchen 1 bis 8, wobei man bei der Herstellung der titanhaitigen Feststoffkomponente a) zunächst in einer ersten Stufe ein anorganisches Oxid als Träger mit einer Lösung der Verbindung des Magnesiums in einem inerten Lösungsmittel versetzt, dabei dieses Gemisch 0,5 bis 5 Stunden lang bei einer Temperatur zwischen 10 und 120°C rührt, anschließend unter ständigem Rühren ein Halogen im wenigstens zweifachen Überschuß, bezogen auf die Verbindung des Magnesiums, hinzufügt, nach etwa 20 bis 120 Minuten dieses Reaktionsprodukt bei einer Temperatur von 10 bis 150°C mit einem C₁- bis C₈-Alkanol, einem Halogenid oder Alkoholat des drei- oder vierwertigen Titans sowie einem Carbonsäureester als Elektronendonorverbindung umsetzt, das daraus resultierende Gemisch wenigstens 30 Minuten lang bei einer Temperatur zwischen 10 und 150°C rührt, den so erhaltenen festen Stoff anschließend abfiltriert und wäscht und danach in einer zweiten Stufe den aus der ersten Stufe erhaltenen Feststoff in einem inerten Lösungsmittel, wobei dieses wenigstens 5 Gew.-% Titantetrachlorid enthält, extrahiert und wäscht, **dadurch gekennzeichnet, daß** als Lösungsmittel in beiden Stufen der Herstellung der titanhaltigen Feststoffkomponente a) ein aromatischer Kohlenwasserstoff verwendet wird.

## Claims

1. A catalyst system of the Ziegler-Natta type comprising as active constituents
a) a titanium-containing solid component which is obtained by reacting a compound of titanium with a compound of magnesium, a halogen, an inorganic oxide as support, a C₁-C₈-alkanol and a carboxylic ester as electron donor compound,
and also, as cocatalyst,
b) an aluminum compound and
c) if desired, a further electron donor compound which can be obtained by,
in the preparation of the titanium-containing solid component a), first admixing, in a first stage, an inorganic oxide as support with a solution of the compound of magnesium in an inert solvent, stirring this mixture for from 0.5 to 5 hours at from 10 to 120°C, subsequently adding a halogen in an at least twofold excess, based on the compound of magnesium, while stirring continually, after from about 20 to 120 minutes reacting this reaction product at from 10 to 150°C with a C₁-C₈-alkanol, a halide or alkoxide of trivalent or tetravalent titanium and a carboxylic ester as electron donor compound, stirring the resulting mixture for at least 30 minutes at from 10 to 150°C, subsequently filtering off and washing the solid thus obtained and then, in a second stage, extracting the solid obtained from the first stage in an inert solvent comprising at least 5% by weight of titanium tetrachloride and washing it, where an aromatic hydrocarbon is used as solvent in both stages of the preparation of the titanium-containing solid component a).

2. A catalyst system as claimed in claim 1, wherein the aromatic hydrocarbon used in the reaction of the individual components for preparing the titanium-containing solid component a) is a C₇-C₁₂-alkylbenzene.

3. A catalyst system as claimed in claim 1 or 2, wherein the aromatic hydrocarbon used in the reaction of the individual components for preparing the titanium-containing solid component a) is ethylbenzene.

4. A catalyst system as claimed in any of claims 1 to 3, wherein the inorganic oxide used has a pH of from 1 to 6.5, a mean particle diameter of from 5 to 200 µm and voids or channels having a mean diameter of from 1 to 20 µm, which voids or channels have a macroscopic proportion by volume in the total particle in the range from 5 to 30%.

5. A catalyst system as claimed in any of claims 1 to 4, wherein the inorganic oxide used is spray dried.

6. A catalyst system as claimed in any of claims 1 to 5, wherein the inorganic oxide used is silica gel (SiO₂).

7. A catalyst system as claimed in any of claims 1 to 6, wherein the further electron donor compound c) used is an organosilicon compound of the general formula (I)
R¹ ₙSi(OR²)₄₋ₙ (I),
where R¹ are identical or different and are each a C₁-C₂₀-alkyl group, a 5- to 7-membered cycloalkyl group which can in turn bear a C₁-C₁₀-alkyl group, or a C₆-C₂₀-aryl or arylalkyl group, R² are identical or different and are each a C₁-C₂₀-alkyl group and n is 1, 2 or 3.

8. A catalyst system as claimed in any of claims 1 to 7, wherein the aluminum compound b) used is a trialkylaluminum compound whose alkyl groups each have from 1 to 8 carbon atoms.

9. A process for preparing a catalyst system as claimed in any of claims 1 to 8, where the titanium-containing solid component a) is prepared by, in a first stage, first admixing an inorganic oxide as support with a solution of the compound of magnesium in an inert solvent, stirring this mixture for from 0.5 to 5 hours at from 10 to 120°C, subsequently adding a halogen in an at least twofold excess, based on the compound of magnesium, while stirring continually, after from about 20 to 120 minutes reacting this reaction product at from 10 to 150°C with a C₁-C₈-alkanol, a halide or alkoxide of trivalent or tetravalent titanium and a carboxylic ester as electron donor compound, stirring the resulting mixture for at least 30 minutes at from 10 to 150°C, subsequently filtering off and washing the solid thus obtained and then, in a second stage, extracting the solid obtained from the first stage in an inert solvent comprising at least 5% by weight of titanium tetrachloride and washing it, wherein an aromatic hydrocarbon is used as solvent in both stages of the preparation of the titanium-containing solid component a).

## Revendications

1. Système de catalyseur du type catalyseur de Ziegler-Natta renfermant, en tant que constituant actif
a) un composant solide renfermant du titane, qu'on obtient par réaction d'un dérivé de titane avec un dérivé de magnésium, un halogène, un oxyde inorganique en tant que support, un alcanol en C₁ à C₈ et un ester d'acide carboxylique en tant que composé donneur d'électrons,
ainsi qu'en tant que cocatalyseur,
b) un dérivé d'aluminium et
c) éventuellement un autre composé donneur d'électrons, pouvant être obtenu de la manière suivante :
pour la préparation du composant solide renfermant du titane, a) d'abord dans une première étape, on ajoute une solution du dérivé de magnésium dans un solvant inerte à un oxyde inorganique comme support, et ensuite on agite ce mélange pendant 0,5 à 5 heures à une température comprise entre 10 et 120°C et enfin, on ajoute un halogène en un excès au moins double, exprimé par rapport au dérivé de magnésium, et après environ 20 à 120 minutes, on mélange ce produit de réaction à une température de 10 à 150°C avec un alcanol en C₁ à C₈, un halogénure ou un alcoolate de titane trivalent ou quadrivalent, ainsi qu'un ester carboxylique en tant que composé électrodonneur, puis on agite le mélange résultant pendant au moins 30 minutes à une température de 10 à 150°C, et on sépare ensuite le solide ainsi obtenu par filtration et on le lave et ensuite, dans une deuxième étape, on extrait le solide obtenu dans un solvant inerte qui renferme au moins 5 % en poids de chlorure de titane, et le lave, et on utilise en tant que solvant dans les deux étapes de préparation du composant solide renfermant du titane a), un hydrocarbure aromatique.

2. Système de catalyseur selon la revendication 1, dans lequel, en tant qu'hydrocarbure aromatique dans la transformation de chaque composant pour la préparation du constituant solide renfermant du titane a), on utilise un alkylbenzène en C₇ à C₁₂.

3. Système de catalyseur selon la revendication 1 ou 2, dans lequel, en tant qu'hydrocarbure aromatique pour la réaction de chaque composant pour la préparation du solide renfermant du titane a), on utilise de l'éthylbenzène.

4. Système de catalyseur selon l'une quelconque des revendications 1 à 3, dans lequel l'oxyde inorganique utilisé présente une valeur de pH de 1 à 6,5, un diamètre particulaire moyen de 5 à 200 µm et des pores ou canaux d'un diamètre moyen de 1 à 20 µm, dont le volume macroscopique représente de 5 à 30 % du volume total de la particule.

5. Système de catalyseur selon l'une quelconque des revendications 1 à 4, dans lequel l'oxyde inorganique utilisé est séché par pulvérisation.

6. Système de catalyseur selon l'une quelconque des revendications 1 à 5, dans lequel, en tant qu'oxyde inorganique, on utilise du gel de silice (SiO₂).

7. Système de catalyseur selon l'une quelconque des revendications 1 à 6, dans lequel, en tant que donneur d'électrons supplémentaires c), on utilise un dérivé organique du silicium de formule générale (I)
R¹ ₙSi(OR²)₄₋ₙ (I)
où les R^{1,} sont identiques ou différents, et représentent un groupe alkyle en C₁ à C₂₀, un groupe cycloalkyle à 5 ou à 7 éléments, qui lui-même peut porter un groupe alkyle en C₁ à C₁₀, ou bien un groupe aryle ou alkylaryle en C₆ à C₂₀, R² identique ou différent, et représente un groupe alkyle en C₁ à C₂₀ et n vaut 1, 2 ou 3.

8. Système de catalyseur selon la revendication 1 à 7, dans lequel, en tant que dérivé d'aluminium b), on utilise un dérivé trialkylaluminium dont les groupes alkyle ont chacun de 1 à 8 atomes de carbone.

9. Procédé de préparation d'un système de catalyseur selon l'une quelconque des revendications 1 à 8, dans lequel, dans la préparation du composant renfermant du titane a), dans une première étape tout d'abord on mélange un oxyde inorganique en tant que support avec une solution du dérivé de magnésium dans un solvant inerte, ensuite on agite ce mélange pendant 0,5 à 5 heures à une température de 10 à 120°C et enfin, sous agitation permanente, on ajoute un halogène en un excès au moins double exprimé par rapport au dérivé de magnésium et ensuite, après environ 20 à 120 minutes, on ajoute, à une température de 10 à 150°C, un alcanol en C₁ à C₈, un halogénure ou alcoolate de titane trivalent ou quadrivalent, ainsi qu'un ester d'acide carboxylique en tant que composé donneur d'électrons, on agite le mélange résultant pendant au moins 30 minutes à une température comprise entre 10 et 150°C, on filtre le produit solide obtenu et on le lave, et ensuite, dans une deuxième étape, on extrait le produit solide obtenu à l'aide d'un solvant inerte, celui-ci renfermant au moins 5 % en poids de tétrachlorure de titane, on extrait et on lave, **caractérisé en ce que**, en tant que solvant dans les deux étapes de préparation du composant solide renfermant du titane a), on utilise un hydrocarbure aromatique.
